# EUROPÄISCHE PATENTANMELDUNG

(11) **EP 4 342 275 A1**
(43) Veröffentlichungstag der Anmeldung: **27.03.2024**
(21) Anmeldenummer: 23194756.5
(22) Anmeldetag: 01.09.2023
(51) Int. Cl.: A01B 79/00, A01D 41/127

(54) **VERFAHREN UND STEUERGERÄT ZUM BETREIBEN EINER LANDWIRTSCHAFTLICHEN ERNTEMASCHINE SOWIE LANDWIRTSCHAFTLICHE ERNTEMASCHINE**

(30) Priorität: 05.09.2022 DE 102022122350
(71) Anmelder: CLAAS Saulgau GmbH, 88348 Bad Saulgau (DE)
(72) Erfinder: Fugunt, Michael, 88410 Bad Wurzach (DE); Schleifer, Werner, 88512 Mengen (DE); Reinhardt, Martin, 72800 Eningen (DE); Bistritz, Philipp, 78224 Singen (DE); Neuhauser, Markus, 88489 Wain (DE)

(57) **Zusammenfassung**

Verfahren zum Betreiben einer landwirtschaftlichen Erntemaschine (1), wobei die landwirtschaftliche Erntemaschine (1) mindestens ein Mähwerk (3, 4, 5) aufweist, wobei das jeweilige Mähwerk (3, 4, 5) Mähorgane (6) zum Mähen von Erntegut und eine Schwadeinrichtung (7, 8) zum Auslegen des gemähten Ernteguts in Form mindestens eines Schwads (9, 10, 11) aufweist, wobei eine Bestandsdichte des Ernteguts und/oder eine Feuchtigkeit des Ernteguts ermittelt wird, und wobei abhängig von der ermittelten Bestandsdichte des Ernteguts und/oder der ermittelten Feuchtigkeit des Ernteguts eine Breite des mindestens einen Schwads (9, 10, 11) automatisch eingestellt wird.

## Beschreibung

Die Erfindung betrifft ein Verfahren und ein Steuergerät zum Betreiben einer landwirtschaftlichen Erntemaschine und eine landwirtschaftliche Erntemaschine.

Aus der Praxis sind landwirtschaftliche Erntemaschinen mit mindestens einem Mähwerk bekannt. So kann eine landwirtschaftliche Erntemaschine ein Trägerfahrzeug und mindestens ein an das Trägerfahrzeug gekoppeltes Mähwerk aufweisen. Das jeweilige Mähwerk verfügt über Mähorgane zum Mähen von Erntegut und über eine Schwadeinrichtung, um das gemähte Erntegut in Form mindestens eines Schwads auszulegen.

DE 10 2005 051 543 A1 offenbart eine landwirtschaftliche Erntemaschine mit einem Trägerfahrzeug und mit drei an das Trägerfahrzeug gekoppelten Mähwerken. Die Mähwerke können das geschnittene Erntegut in Form von Schwaden ablegen bzw. auslegen.

DE 88 12 645 U1 offenbart ein als Frontmähwerk ausgebildetes Mähwerk einer landwirtschaftlichen Erntemaschine. Über Schwadscheiben oder andere Schwadformer wie Stabrechen, Schwadbleche oder angetriebene Bandförderer kann das geschnittene bzw. gemähte Erntegut in Form eines Schwads ausgelegt werden.

DE 20 2019 001 404 U1 schlägt vor, auf Basis von Fernerkundungsdaten eine Aufbereitungsintensität für landwirtschaftliche Früchte zu berechnen. So wird vorgeschlagen, für Aufbereitungsverfahren wie Knicken, Schneiden, Quetschen und Zuführen von Zusatzstoffen die Aufbereitungsintensität zu berechnen und entsprechende Aufbereitungsorgane abhängig hiervon zu regeln.

Hiervon ausgehend liegt der vorliegenden Erfindung die Aufgabe zugrunde, ein neuartiges Verfahren und Steuergerät zum Betreiben einer landwirtschaftlichen Erntemaschine und eine landwirtschaftliche Erntemaschine mit einem solchen Steuerungssystem zu schaffen.

Diese Aufgabe wird durch ein Verfahren zum Betreiben einer landwirtschaftlichen Erntemaschine nach Patentanspruch 1 gelöst.

Erfindungsgemäß wird bei einer landwirtschaftlichen Erntemaschine mit mindestens einem Mähwerk eine Bestandsdichte des Ernteguts und/oder eine Feuchtigkeit des Ernteguts ermittelt, wobei abhängig von der ermittelten Bestandsdichte des Ernteguts und/oder der ermittelten Feuchtigkeit des Ernteguts eine Breite des mindestens einen Schwads, der von dem mindestens einem Mähwerk ausgelegt wird, automatisch eingestellt wird.

Mit der hier vorliegenden Erfindung wird erstmals vorgeschlagen, die Breite mindestens eines von mindestens einem Mähwerk ausgelegten Schwads aus gemähtem Erntegut abhängig von der ermittelten Bestandsdichte des Ernteguts und/oder der ermittelten Feuchtigkeit des Ernteguts automatisch einzustellen.

Der Erfindung liegt dabei die Erkenntnis zugrunde, dass der Trocknungsprozess von geschnittenem, zu mindestens einem Schwad vereinigtem Erntegut sowohl von der Bestandsdichte des Ernteguts als auch von der Feuchtigkeit des Ernteguts maßgeblich abhängig ist. Durch die automatische Einstellung und damit Verstellung der Breite des mindestens einen ausgelegten Schwads in Abhängigkeit der Bestandsdichte und/oder der Feuchtigkeit des Ernteguts kann der Trocknungsprozess automatisch beeinflusst werden, um insbesondere dann, wenn das Erntegut zum Beispiel von einem Ladewagen aufgenommen werden soll, eine homogene Feuchtigkeit im Erntegut zu gewährleisten.

Vorzugsweise wird die Breite des mindestens einen Schwads umso größer oder breiter eingestellt, je höher oder größer die ermittelte Bestandsdichte des Ernteguts ist. Diese Verstellung der Breite des Ernteguts, abhängig von der ermittelten Bestandsdichte, erfolgt vorzugsweise kennlinienabhängig oder kennfeldabhängig.

Vorzugsweise wird die Breite des mindestens einen Schwads umso größer oder breiter eingestellt, je höher oder größer die ermittelte Feuchtigkeit des Ernteguts ist. Diese Einstellung der Breite des mindestens einen Schwads, abhängig von der ermittelten Feuchtigkeit des Ernteguts, erfolgt ebenfalls vorzugsweise kennlinienabhängig oder kennfeldabhängig.

Vorzugsweise wird die Bestandsdichte des Ernteguts und/oder die Feuchtigkeit des Ernteguts mit Hilfe mindestens eines Sensors der landwirtschaftlichen Erntemaschine ermittelt. Alternativ oder auch zusätzlich kann die Bestandsdichte des Ernteguts und/oder die Feuchtigkeit des Ernteguts auf Grundlage von Fernerkundungsdaten wie Satellitenbildern und/oder Drohnenbildern und/oder Ertragskarten und/oder Wetterdaten ermittelt werden. Wird die Bestandsdichte und/oder Feuchtigkeit des Ernteguts mithilfe mindestens eines Sensors der landwirtschaftlichen Erntemaschine ermittelt, so kann die Breite des mindestens einen Schwads dynamisch automatisch eingestellt werden. Auch abhängig von Drohnenbildern, die mithilfe mindestens einer Drohne gewonnen werden, die über einem zu bearbeitenden Untergrund fliegt, kann die Breite des mindestens einen Schwads dynamisch automatisch eingestellt werden. Drohnenbilder können dabei mit Ertragskarten und Wetterdaten kombiniert werden.

Vorzugsweise wird die Breite des mindestens einen Schwads abhängig von der ermittelten Bestandsdichte und/oder der ermittelten Feuchtigkeit kennlinienabhängig oder kennfeldabhängig eingestellt. Dann, wenn die Breite des jeweiligen Schwads abhängig von der ermittelten Bestandsdichte und der ermittelten Feuchtigkeit kennlinienabhängig oder kennfeldabhängig eingestellt wird, ist die Ermittlung der Breite des Schwads besonders einfach und zuverlässig auf Grundlage eines hinterlegten, empirisch ermittelten Kennfelds bzw. einer entsprechenden Kennlinie möglich.

Das Steuergerät ist in Patentanspruch 7 ist definiert.

Die landwirtschaftliche Erntemaschine ist in Patentanspruch 9 definiert.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:

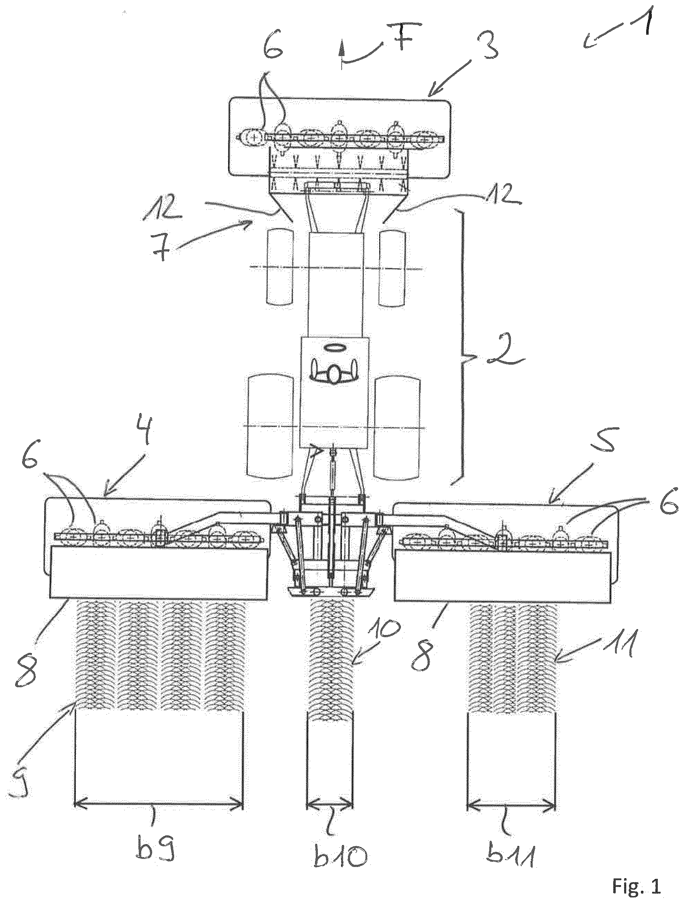

Fig. 1 eine Draufsicht einer landwirtschaftlichen Erntemaschine.

Fig. 1 zeigt eine landwirtschaftliche Erntemaschine 1, die ein Trägerfahrzeug 2 und mehrere am Trägerfahrzeug 2 montierte Mähwerke 3, 4 und 5 aufweist. Bei dem Mähwerk 3 handelt es sich in Fig. 1 um ein Frontmähwerk, bei den Mähwerken 4 und 5 um Heckmähwerke.

Jedes der Mähwerke 3, 4 und 5 verfügt über Mähorgane 6 zum Mähen von Erntegut. Die Mähorgane 6 werden auch als Schneidorgane bezeichnet.

Jedes der Mähwerke 3, 4 und 5 verfügt weiterhin über eine Schwadeinrichtung 7, 8. Über die Schwadeinrichtungen 7, 8 kann gemähtes bzw. geschnittenes Erntegut in Form mindestens eines Schwads ausgelegt werden. So zeigt Fig. 1, dass jedes Mähwerk 3, 4, 5 jeweils einen Schwad 9, 10, 11 geschnittenen Ernteguts auslegt.

So legt die Schwadeinrichtung 7 das vom Frontmähwerk 3 gemähte bzw. geschnittene Erntegut in Form eines mittleren Schwads 10 aus. Die Schwadeinrichtung 7 des Frontmähwerks 3 verfügt dabei zum Beispiel über Schwadbleche 12. Über die Ausrichtung der Schwadbleche 12 kann die Breite b10 des mittleren Schwads 10 eingestellt werden.

Die beiden Heckmähwerke 4, 5 geben jeweils einen Schwad 9, 11 aus, nämlich über ihre Schwadeinrichtung 8. Als Schwadeinrichtung 8 kann das jeweilige Heckmähwerk 4, 5 auch Schwadbleche und/oder eine Querfördereinrichtung umfassen. In Fig. 1 gibt das Heckmähwerk 4 den Schwad 9 und das Heckmähwerk 5 den Schwad 11 aus, und zwar mit den entsprechenden Breiten b9 und b11.

Die Fortbewegungsrichtung der landwirtschaftlichen Erntemaschine der Fig. 1 ist in Fig. 1 durch den Pfeil F gekennzeichnet.

Im Sinne der hier vorliegenden Erfindung wird die Bestandsdichte des Ernteguts und/oder die Feuchtigkeit des Ernteguts ermittelt. Abhängig von der ermittelten Bestandsdichte des Ernteguts und/oder der ermittelten Feuchtigkeit des Ernteguts wird die Breite des mindestens einen Schwads automatisch eingestellt. So ist es möglich, für jeden der in Fig. 1 gezeigten drei Schwade 9, 10 und 11 die Schwadbreite b9, b10, b11 individuell automatisch einzustellen.

Die Breite b9, b10, b11 des mindestens einen Schwads 9, 10, 11 wird umso größer oder breiter eingestellt, desto höher oder größer die ermittelte Bestandsdichte des Ernteguts ist.

Ferner wird die Breite b9, b10, b11 des mindestens einen Schwads 9, 10, 11 umso größer oder breiter eingestellt, je höher oder größer die ermittelte Feuchtigkeit des Ernteguts ist.

Der Erfindung liegt die Erkenntnis zugrunde, dass der Trocknungsprozess des gemähten und zu mindestens einem Schwad vereinigten Ernteguts von der Bestandsdichte und der Feuchtigkeit desselben abhängig ist.

Durch die automatische Einstellung der Schwadbreite, abhängig von der Bestandsdichte und/oder der Feuchtigkeit des Ernteguts, kann der Trocknungsprozess aktiv beeinflusst werden, um dann, wenn das Erntegut zum Beispiel mit einem Ladewagen vom Untergrund oder Boden aufgenommen werden soll, eine homogene Feuchtigkeit im Erntegut bereitzustellen.

Die Bestandsdichte des Ernteguts und/oder die Feuchtigkeit des Ernteguts kann mithilfe mindestens eines Sensors der landwirtschaftlichen Erntemaschine ermittelt werden.

So kann im Bereich jedes Mähwerks 3, 4 und 5 ein individueller Sensor zur Ermittlung der Feuchtigkeit und/oder ein individueller Sensor zur Ermittlung der Bestandsdichte verbaut sein, um für jedes Mähwerk 3, 4, 5 die Bestandsdichte und/oder die Feuchtigkeit individuell zu ermitteln und so für jedes Mähwerk 3, 4, 5 die Breite b9, b10, b11 des jeweiligen Schwads 9, 10, 11 individuell einzustellen. Feuchtigkeitssensoren sind hinlänglich bekannt. Bei einem Sensor zur Ermittlung der Bestandsdichte kann es sich um eine Kamera handeln.

Es ist auch möglich, ausschließlich an einem Mähwerk 3, 4, 5 einen Sensor zur Ermittlung der Bestandsdichte und/oder der Feuchtigkeit des Ernteguts vorzusehen und dann abhängig hiervon die Breite b9, b10, b11 des jeweiligen Schwads 9, 10, 11 für alle Mähwerke 3, 4, 5 zu ermitteln.

Alternativ oder zusätzlich zur Ermittlung der Bestandsdichte und/oder der Feuchtigkeit des Ernteguts mithilfe mindestens eines Sensors ist es möglich, die Bestandsdichte des Ernteguts und/oder die Feuchtigkeit des Ernteguts auf Grundlage von Fernerkundungsdaten wie Satellitenbildern und/oder Drohnenbildern und/oder Ertragskarten und/oder Wetterdaten zu ermitteln.

So kann zum Beispiel eine über einem zu bearbeitenden Untergrund fliegende Drohne Bilder ermitteln, die dann dazu genutzt werden, die Bestandsdichte des Ernteguts und/oder die Feuchtigkeit des Ernteguts zu ermitteln, und zwar vorzugsweise kombiniert mit Ertragskarten und/oder Wetterdaten. Auch so kann hochgenau die Bestandsdichte und/oder die Feuchtigkeit des Ernteguts ermittelt werden, um abhängig hiervon die Breite b9, b10, b11 des jeweiligen Schwads 9, 10, 11 automatisch einzustellen.

Die Breite des mindestens einen Schwads wird vorzugsweise abhängig von der ermittelten Bestandsdichte und/oder ermittelten Feuchtigkeit kennlinienabhängig oder kennfeldabhängig eingestellt.

So kann in einem Steuergerät eine Kennlinie oder auch ein Kennfeld hinterlegt sein, um abhängig von der Bestandsdichte und/oder der Feuchtigkeit des Ernteguts eine Soll-Breite des mindestens einen Schwads 9, 10, 11 automatisch zu ermitteln. Das Steuergerät kann abhängig von der ermittelten Soll-Breite des jeweiligen Schwads 9, 10, 11 die Schwadeinrichtung 7, 8 des jeweiligen Mähwerks 3, 4, 5 automatisch ansteuern, um die Ist-Breite des jeweiligen Schwads automatisch einzustellen, nämlich an die Soll-Breite anzupassen.

Die Erfindung betrifft weiterhin ein Steuergerät einer landwirtschaftlichen Erntemaschine, welches eingerichtet ist, das erfindungsgemäße Verfahren automatisch auszuführen. Bei diesem Steuergerät handelt es sich vorzugsweise um ein elektronisches Steuergerät, welches über hardwareseitige Mittel und softwareseitige Mittel zur Durchführung des erfindungsgemäßen Verfahrens verfügt.

Zu den hardwareseitigen Mitteln zählen Datenschnittstellen, um mit den an der Ausführung des erfindungsgemäßen Verfahrens beteiligten Baugruppen automatisch Daten auszutauschen.

So ist es möglich, dass das Steuergerät über mindestens eine Datenschnittstelle Messgrößen mindestens eines Sensors empfängt, auf Basis derer dann das Steuergerät die Bestandsdichte des Ernteguts und/oder die Feuchtigkeit desselben ermittelt. Über eine weitere Datenschnittstelle kann das Steuergerät die von demselben ermittelte Schwadbreite automatisch ausgeben, insbesondere um automatisch die Breite des Schwads an den jeweiligen Mähwerken 3, 4, 5 einzustellen, wozu das Steuergerät entsprechende Stellgrößen an die Schwadeinrichtung 7, 8 des jeweiligen Mähwerks 3, 4, 5 über eine jeweilige Datenschnittstelle ausgibt.

Zu den hardwareseitigen Mitteln zählen weiterhin ein Speicher zur Datenspeicherung sowie ein Prozessor zur Datenverarbeitung. Im Speicher kann zum Beispiel ein Kennfeld oder eine Kennlinie hinterlegt sein, auf Basis dessen, abhängig von der ermittelten Bestandsdichte und/oder abhängig von der ermittelten Feuchtigkeit die Breite des jeweiligen Schwads automatisch ermittelt und eingestellt wird.

Zu den softwareseitigen Mitteln zählen Programmbausteine, die im Steuergerät zur Durchführung des erfindungsgemäßen Verfahrens implementiert sind.

Das Steuergerät ist eingerichtet, um abhängig von der ermittelten Bestandsdichte und/oder der ermittelten Feuchtigkeit des Ernteguts die Breite des mindestens einen Schwads automatisch einzustellen. Ferner ist das Steuergerät vorzugsweise eingerichtet, um die Bestandsdichte des Ernteguts und/oder die Feuchtigkeit des Ernteguts automatisch zu ermitteln.

Mit der Erfindung lässt sich in Abhängigkeit der Bestandsdichte und/oder der Feuchtigkeit des Ernteguts die Breite von Schwaden 9, 10, 11 an einer landwirtschaftlichen Erntemaschine mit Mähwerken 3, 4, 5 automatisch einstellen, um nach einem Trocknungsprozess eine homogene Feuchtigkeit im Erntegut zu gewährleisten. Die Einstellung der Schwadeinrichtungen 7, 8 der Mähwerke 3, 4, 5 erfolgt vorzugsweise automatisch, insbesondere durch eine elektrohydraulische Verstellung oder mechanische Verstellung der jeweiligen Schwadeinrichtung 7, 8. Abhängig von der Bestandsdichte und/oder der Feuchtigkeit kann die Schwadbreite automatisch angepasst werden.

Ferner betrifft die Erfindung eine landwirtschaftliche Erntemaschine mit mindestens einem Mähwerk 3, 4, 5 und einem erfindungsgemäßen Steuergerät.

Es ist möglich, im Bereich jedes Mähwerks 3, 4, 5 ein separates Steuergerät vorzusehen. Bei einer Mähwerkskombination, bestehend aus mehreren Mähwerken 3, 4, 5 - beispielsweise bestehend aus einem Frontmähwerk und einem oder mehreren Heckmähwerken - könnte alternativ für alle Mähwerke 3, 4, 5 ein gemeinsames Steuergerät vorgesehen werden. Dieses gemeinsame Steuergerät könnte vorzugsweise an einer Anbauvorrichtung der Heckmähwerke angeordnet sein.

Es wäre jedoch auch möglich, ein gemeinsames Steuergerät am Trägerfahrzeug 2 anzuordnen.

### Bezugszeichenliste

- 1: landwirtschaftliche Erntemaschine
- 2: Trägerfahrzeug
- 3: Mähwerk
- 4: Mähwerk
- 5: Mähwerk
- 6: Mähorgan
- 7: Schwadeinrichtung
- 8: Schwadeinrichtung
- 9: Schwad
- 10: Schwad
- 11: Schwad

## Patentansprüche

1. Verfahren zum Betreiben einer landwirtschaftlichen Erntemaschine (1),
wobei die landwirtschaftliche Erntemaschine (1) mindestens ein Mähwerk (3, 4, 5) aufweist,
wobei das jeweilige Mähwerk (3, 4, 5) Mähorgane (6) zum Mähen von Erntegut und eine Schwadeinrichtung (7, 8) zum Auslegen des gemähten Ernteguts in Form mindestens eines Schwads (9, 10, 11) aufweist,
**dadurch gekennzeichnet, dass**
eine Bestandsdichte des Ernteguts und/oder eine Feuchtigkeit des Ernteguts ermittelt wird,
abhängig von der ermittelten Bestandsdichte des Ernteguts und/oder der ermittelten Feuchtigkeit des Ernteguts eine Breite des mindestens einen Schwads (9, 10, 11) automatisch eingestellt wird.

2. Verfahren nach Anspruch 1, **dadurch gekennzeichnet, dass** die Breite des mindestens einen Schwads (9, 10, 11) umso größer oder breiter eingestellt wird, je höher oder größer die ermittelte Bestandsdichte des Ernteguts ist.

3. Verfahren nach Anspruch 1 oder 2, **dadurch gekennzeichnet, dass** die Breite des mindestens einen Schwads (9, 10, 11) umso größer oder breiter eingestellt wird, je höher oder größer die ermittelte Feuchtigkeit des Ernteguts ist.

4. Verfahren nach einem der Ansprüche 1 bis 3, **dadurch gekennzeichnet, dass** die Bestandsdichte des Ernteguts und/oder die Feuchtigkeit des Ernteguts mit Hilfe mindestens eines Sensors der landwirtschaftlichen Erntemaschine (1) ermittelt wird.

5. Verfahren nach einem der Ansprüche 1 bis 4, **dadurch gekennzeichnet, dass** die Bestandsdichte des Ernteguts und/oder die Feuchtigkeit des Ernteguts auf Grundlage von Fernerkundungsdaten wie Satellitenbildern und/oder Drohnenbildern und/oder Ertragskarten und/oder Wetterdaten ermittelt wird.

6. Verfahren nach einem der Ansprüche 1 bis 5, **dadurch gekennzeichnet, dass** die Breite des mindestens einen Schwads (9, 10, 11) abhängig von der ermittelten Bestandsdichte und/oder der ermittelten Feuchtigkeit kennlinienabhängig oder kennfeldabhängig eingestellt wird.

7. Steuergerät einer landwirtschaftlichen Erntemaschine (1),
wobei die landwirtschaftliche Erntemaschine (1) mindestens ein Mähwerk (3, 4, 5) aufweist,
wobei das jeweilige Mähwerk (3, 4, 5) Mähorgane (6) zum Mähen von Erntegut und eine Schwadeinrichtung (7, 8) zum Auslegen des gemähten Ernteguts in Form mindestens einen Schwads (9, 10, 11) aufweist,
**dadurch gekennzeichnet, dass**
das Steuergerät eingerichtet ist, um abhängig von einer ermittelten Bestandsdichte des Ernteguts und/oder einer ermittelten Feuchtigkeit des Ernteguts eine Breite des mindestens einen Schwads (9, 10, 11) automatisch einzustellen.

8. Steuergerät nach Anspruch 7, **dadurch gekennzeichnet, dass** das Steuergerät eingerichtet ist, das Verfahren nach einem der Ansprüche 1 bis 6 automatisch auszuführen.

9. Landwirtschaftliche Erntemaschine (1), mit mindestens einem Mähwerk (3, 4, 5) und mit einem Steuergerät nach Anspruch 7 oder 8.
